# EUROPÄISCHE PATENTSCHRIFT

(11) **EP 1 827 965 B1**
(45) Veröffentlichungstag und Bekanntmachung des Hinweises auf die Patenterteilung: **15.04.2009**
(21) Anmeldenummer: 05812568.3
(22) Anmeldetag: 02.12.2005
(51) Int. Cl.: B63G 8/00, B63G 8/16, B63G 7/02

(54) **EINRICHTUNG UND VERFAHREN ZUM TRACKEN EINES UNTERWASSERFAHRZEUGS**
DEVICE AND METHOD FOR TRACKING AN UNDERWATER VESSEL
DISPOSITIF ET PROCEDE DE SUIVI D'UN SOUS-MARIN

(30) Priorität: 23.12.2004 DE 102004062124
(43) Veröffentlichungstag der Anmeldung: 05.09.2007
(73) Patentinhaber: ATLAS ELEKTRONIK GMBH, 28305 Bremen (DE)
(72) Erfinder: LAMBERTUS, Detlef, 27711 Osterholz-Scharmbeck (DE); HÜCKING, Christian, 28832 Achim (DE); RICHTER, Ralf, 28876 Oyten (DE)
(74) Vertreter: Wasiljeff, Johannes M.B.
(86) Internationale Anmeldenummer: PCT/EP2005/012910
(87) Internationale Veröffentlichungsnummer: WO 2006/072302

(56) Entgegenhaltungen:
- FR-A- 2 832 975
- GB-A- 2 305 411
- US-A- 5 370 074
- US-A- 5 396 859
- US-B1- 6 802 236
- BIELER H: "WELCHEN WEG GEHT DIE MINENJAGD?. EIN UMFASSENDER UEBERBLICK" SOLDAT UND TECHNIK, REPORT-VERLAG, FRANKFURT AM MAIN, DE, Bd. 39, Nr. 7, 1. Juli 1996 (1996-07-01), Seiten 469-473, XP000595958 ISSN: 0038-0989

## Beschreibung

Die Erfindung betrifft eine Einrichtung und ein Verfahren zum Tracken eines Unterwasserfahrzeugs der im Oberbegriff des Anspruchs 1 bzw. des Anspruchs 7 definierten Gattung.

Ein bekanntes Tracksystem, das auf dem SSBL-Prinzip (supershort baseline) beruht (Simrad HPR-309 Hydroacoustic Position Reference System, Operator's Manual 3rd Edition October 1983, SIMRAD Subsea A/S, März 1985) umfasst zwei Komponenten. Die eine Komponente ist ein auf dem Unterwasserfahrzeug angeordneter Transponder/Responder, der auf den Empfang von vorzugsweise codierten Schallimpulsen oder elektrischen Sendeimpulsen hin seinerseits vorzugsweise codierte Schallimpulse abstrahlt, und eine Track- oder Verfolgungsvorrichtung, die auf einer Plattform angeordnet ist und einen akustischen und/oder elektrischen Sender und einen Schallempfänger aufweist, wobei der Schallempfänger zwei im Abstand voneinander angeordneten Hydrofone besitzt. Beim Verfolgen oder Tracken des Unterwasserfahrzeugs werden von dem Sender fortlaufend akustische oder elektrische Abfrageimpulse ins Wasser oder über einen Verbindungsdraht zum Unterwasserfahrzeug ausgesendet, die vom Transponder/Responder am Unterwasserfahrzeug empfangen werden. Der Transponder/Responder strahlt seinerseits auf jeden Abfrageimpuls hin einen Antwortimpuls ab, der von den beiden Hydrofonen des Empfänger der Trackvorrichtung mit einer gewissen Zeitdifferenz empfangen wird. Aus der Phasenverschiebung zwischen den elektrischen Ausgangssignalen der Hydrofone wird der Peilwinkel zum Unterwasserfahrzeug und aus der gemessenen Zeit, die vom Aussenden des Abfrageimpulses und der Ankunft des daraufhin vom Transponder/Responder abgestrahlten Antwortimpulses vergeht, unter Berücksichtigung einer dem Transponder/Responder anhaftenden System-Zeitverzögerung die Entfernung zwischen Unterwasserfahrzeug und Plattform berechnet. Peilung und Entfernung ergeben die auf die Position der Plattform bezogene Position des Unterwasserfahrzeugs.

Bei einem System zum Aufspüren und Vernichten von Seeminen (EP 0 535 044 B1) wird das mit einer Sprengladung ausgerüstete Unterwasserfahrzeug von einer unter Wasser schwimmenden Plattform aus ferngelenkt und die Position des Unterwasserfahrzeugs mit einer auf der Plattform angeordneten Trackvorrichtung, die in der vorstehend beschriebenen Weise arbeitet, fortlaufend bestimmt. Die Plattform besitzt eine Ausbringvorrichtung zum Einsetzen des Unterwasserfahrzeugs ins Wasser. Die Plattform selbst ist ein sog. ROV oder ein über ein Kabel an die Plattform angebundenes unbemanntes Unterwasserfahrzeug, kann aber auch ein von einem Mutterschiff räumlich abgesetztes und mit diesem kommunizierendes Hilfsschiff sein.

Bei einem solchen System ist eine präzise Verfolgung des Unterwasserfahrzeugs mit genauer Vermessung der jeweiligen Fahrzeugposition nur bedingt möglich, da die Plattform im Wasser erheblichen Störgrößen, z.B. Seegang, Wasserströmung, ausgesetzt ist, die die Position und akustische Ausrichtung der Trackvorrichtung ständig verändern, was im Extremfall auch zu einem Verlust der akustischen Verbindung zum Unterwasserfahrzeug führen kann.
Der Erfindung liegt die Aufgabe zugrunde, eine Einrichtung und ein Verfahren zum Tracken eines Unterwasserfahrzeugs zu schaffen, die bzw. das die Gefahr eines Verlustes der akustischen Verbindung zwischen Unterwasserfahrzeug und Trackvorrichtung sicher ausschließt und während der Verfolgung des Unterwasserfahrzeugs eine hochgenaue Positionserfassung des Unterwasserfahrzeugs auch unter ungünstigen Bedingungen gewährleistet.

Die Aufgabe ist erfindungsgemäß durch die Merkmale im Anspruch 1 gelöst.

Die erfindungsgemäße Einrichtung bzw. das erfindungsgemäße Verfahren hat den Vorteil, dass durch die aktive Raumstabilisierung die Plattform nicht nur ihre Position, sondern auch ihre Ausrichtung um die Gier-, Nick- und Rollachse beibehält, so dass sowohl die Position als auch die akustische Ausrichtung der Trackvorrichtung konstant gehalten wird und dadurch Messfehler bei der Positionsvermessung, die durch Ortsverlagerung und Änderung der akustischen Ausrichtung bedingt sind, zumindest minimiert werden. Selbst bei starkem Seegang oder extremer Strömung wird jeder Versatz in Position und Ausrichtung kompensiert und insbesondere auch der Verlust der akustischen Verbindung zwischen Trackvorrichtung und Unterwasserfahrzeug sicher verhindert. Die erfindungsgemäße Trackeinrichtung ist für jede Tauchtiefe von Plattform und Unterwasserfahrzeug geeignet, selbst für Einsätze in Wassertiefen größer als 20m.

Zweckmäßige Ausführungsformen der erfindungsgemäßen Einrichtung mit vorteilhaften Weiterbildungen und Ausgestaltungen der Erfindung ergeben sich aus den Ansprüchen 1 bis 6 und zweckmäßige Ausführungsformen des erfindungsgemäßen Verfahrens mit vorteilhaften Weiterbildungen und Ausgestaltungen der Erfindung ergeben sich aus den Ansprüchen 8 bis 11.

Gemäß einer vorteilhaften Ausführungsform der Erfindung ist die Plattform mit horizontal und vertikal wirkenden Manöverantrieben ausgestattet, die in Regelkreisen eingebunden sind. Mit diesen einzeln steuerbaren Manöverantrieben kann die Plattform sehr präzise bezüglich der drei orthogonalen Raumachsen, also in Position und in eingenommener Ausrichtung um die Roll-, Nick- und Gierachse, stabilisiert werden. Dabei sind vier gleichmäßig um die Längsachse der Plattform verteilt, mit Radialabstand von der Längsachse angeordnete Horizontalantriebe, die auch zur Ortsverlagerung der Plattform genutzt werden können, und ein zu diesen rechtwinklig angeordneter Vertikalantrieb ausreichend.

Die Erfindung ist anhand eines in der Zeichnung dargestellten Ausführungsbeispiels im folgenden näher beschrieben. Es zeigen in schematischer Darstellung:
- Fig. 1: ein mit einer Trackeinrichtung verbundenes Unterwasserfahrzeug in Seitenansicht beim Aussetzen aus einem Trägerfahrzeug,
- Fig. 2: das Unterwasserfahrzeug und die Trackeinrichtung nach Beendigung des Aussetzvorgangs in Seitenansicht.

Für eine Vielzahl verschiedenartiger Unterwassermissionen wird ein eigengetriebenes, unbemanntes Unterwasserfahrzeug eingesetzt, das seinen Missionsauftrag entweder autonom durchführt oder während seines Missionsauftrags ferngelenkt wird und während der Mission aufgenommenen Daten über eine Signalleitung an ein Trägerfahrzeug überträgt. Solche Missionen sind beispielsweise die kartographische Erfassung der Topographie oder der Bodenbeschaffenheit des Meeresgrundes, das Aufspüren von Objekten im Seegebiet oder auf dem Meeresgrund und das Bergen oder Beseitigen dieser Objekte. Das Unterwasserfahrzeug wird in dem zu untersuchenden Seegebiet von einem Trägerfahrzeug ins Wasser abgesetzt, und das seinen Laufweg zurücklegende Unterwasserfahrzeug wird mittels einer Trackeinrichtung verfolgt, also getrackt, so dass im Trägerfahrzeug jederzeit die momentane Position des Unterwasserfahrzeugs bekannt ist.

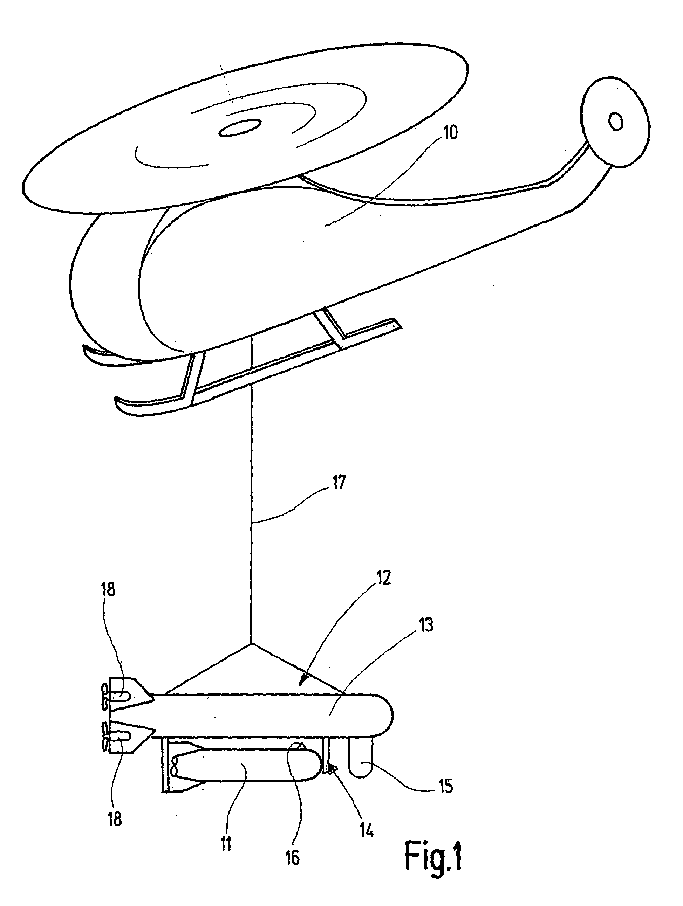

In dem in Fig. 1 illustrierten Ausführungsbeispiel ist das Trägerfahrzeug ein Hubschrauber 10, der das Unterwasserfahrzeug 11 zusammen mit der Trackeinrichtung 12 ins Wasser einsetzt. Alternativ kann das Trägerfahrzeug auch ein Oberflächenschiff oder ein U-Boot sein.

Die Trackeinrichtung 12 weist eine Plattform 13 auf, die mit einer Ausbringvorrichtung 14 zum Aussetzen des Unterwasserfahrzeugs 11 unter Wasser und mit einer Trackvorrichtung 15 ausgestattet ist, die die Position des gestarteten und sich von der Plattform 13 entfernenden Unterwasserfahrzeugs 11 fortlaufend erfasst. Wie nicht weiter dargestellt ist, ist im Ausführungsbeispiel die Trackvorrichtung 15 ein mit einem Transponder/Responder 16 am Unterwasserfahrzeug 11 kommunizierendes APS-System (acoustic positioning system), das beispielhaft auf Basis des eingangs zum Stand der Technik beschriebenen SSBL-Prinzip arbeitet und einen Sender zum Aussenden akustischer Abfrageimpulse im Transponderbetrieb und elektrischer Abfrageimpulse im Responderbetrieb sowie einen elektroakustischen Empfänger aufweist. Letzterer besitzt mindestens zwei im Abstand voneinander angeordnete Hydrofone, die die vom Transponder/Responder 16 auf die Abfrageimpulse hin ausgesendeten Antwortimpulse empfängt. Eine Auswerteeinheit berechnet aus der Phasenverschiebung der Hydrofonsignale die Peilung zum Unterwasserfahrzeug und aus der Laufzeitmessung der ausgesandten Schallimpulse die Entfernung zum Unterwasserfahrzeug.

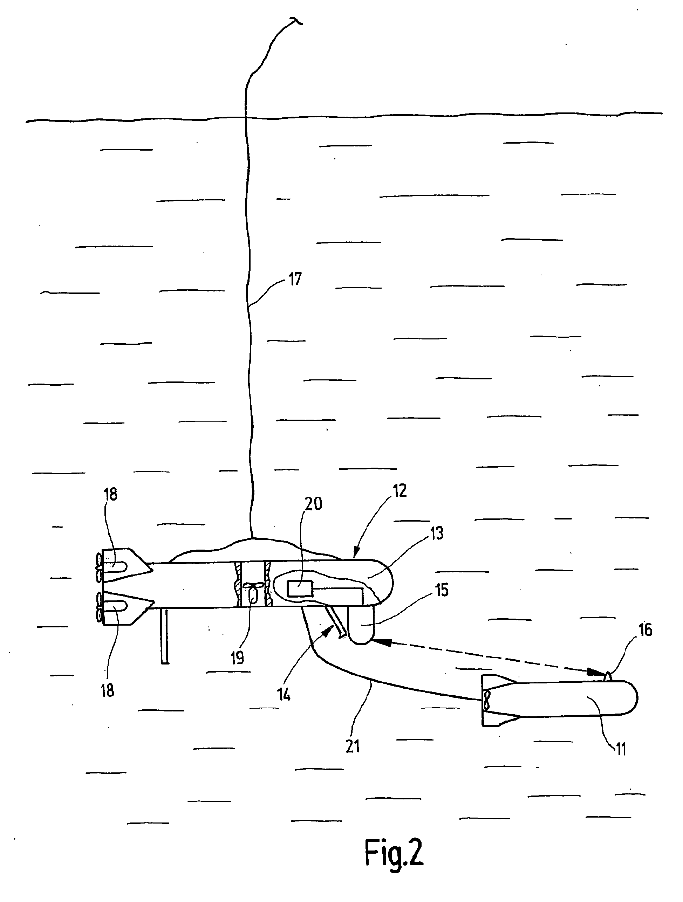

Während des in Fig. 1 illustrierten Aussetzvorgangs ist das Unterwasserfahrzeug 11 in der Ausbringvorrichtung 14 der Plattform 13 gehalten und die Plattform 13 an einem Seil oder Kabel 17 befestigt, das zum Einsetzen der Trackeinrichtung 12 mit Unterwasserfahrzeug 11 ins Wasser mittels einer hier nicht dargestellten Kabelwinde im Hubschrauber 10 gefiert wird. Im Kabel 17 ist mindestens eine Signalleitung zum Datenaustausch zwischen der Trackeinrichtung 12 und dem Hubschrauber 10 enthalten. Bei Erreichen einer vorgegebenen Tauchtiefe der Trackeinrichtung 12 wird das Unterwasserfahrzeug 11 durch Aktivieren der Ausbringvorrichtung 14 von der Plattform 13 getrennt und entfernt sich nach Starten seines Antriebs von der Plattform 13 (Fig. 2).

An der Plattform 13 sind mehrere, horizontal wirkende Manöverantriebe 18, im Ausführungsbeispiel insgesamt vier solche Manöverantriebe 18, und ein vertikal wirkender Manöverantrieb 19 vorgesehen. Die getrennt steuerbaren Manöverantriebe 18, 19 sind mit hier nicht dargestellten Sensoren zur Erfassung von Störgrößen aus der Plattformumgebung in Regelkreise eingebunden. Bei Gleichlauf der horizontal wirkenden Manöverantriebe 18 lässt sich die Plattform 13 in Längsrichtung vor- und rückwärts bewegen und mittels des vertikal wirkenden Manöverantriebs 19 vertikal nach oben anheben oder nach unten absenken. Durch unterschiedliche Ansteuerung der horizontal wirkenden Manöverantriebe 18 lässt sich die Plattform 13 auch im ihre Gier- und Nickachse drehen. Die Manöverantriebe 18, 19 sind zusammen mit Sensoren zur Erfassung von Regelgrößen in Regelkreisen angeordnet. Mit diesen geregelten Manöverantrieben 18, 19 wird nunmehr die Plattform 13 in ihrer Tauchposition raumstabilisiert, d.h. Bewegungskomponenten, die eine Veränderung der Ausrichtung und der Position der Plattform 13 in den drei orthogonalen Raumkoordinaten bewirken, kompensiert. Durch diese Raumstabilisierung der Plattform 13 behält letztere nicht nur ihre Position bei, sondern es werden auch alle ihre Bewegungen um die Gier-, Roll- und Nickachse kompensiert. Dadurch behalten die Hydrofone der Trackvorrichtung 15 ihre Position und Ausrichtung zu jedem Zeitpunkt des Trackens des sich von der Plattform 13 entfernenden Unterwasserfahrzeug 11 unverändert bei, und die Momentanpositionen des Unterwasserfahrzeugs 11 werden hochgenau vermessen, und zwar auch dann, wenn die Plattform 13 einem starken Seegang oder einer erheblichen Längs- oder Querströmung ausgesetzt ist.

Der Trackvorgang mit Bestimmen der Peilung zum Unterwasserfahrzeug 11 und der Entfernung des Unterwasserfahrzeugs 11 zur Trackvorrichtung 15 wird wie eingangs zum Stand der Technik beschrieben durchgeführt. Damit ist zu jedem Zeitpunkt des Unterwasserlaufs des Unterwasserfahrzeugs 11 dessen Position relativ zur Plattform 13 bekannt. Da die absolute Position der Plattform 13 und damit die der Trackvorrichtung 15 bekannt ist, können die relativen Positionskoordinaten des Unterwasserfahrzeugs 11 problemlos in absoluter Positionskoordinaten umgerechnet werden.

Die beschriebene Einrichtung zum Tracken des Unterwasserfahrzeugs 11 kann um eine Lenkvorrichtung 20 erweitert werden, die Lenksignale für das Unterwasserfahrzeug 11 generiert, die über einen das Unterwasserfahrzeug 11 mit der Lenkvorrichtung 20 verbindenden Lenkdraht 21, der vorzugsweise ein Glasfaserkabel oder ein Kupferdraht ist, an die Antriebs- und Steuereinrichtung des Unterwasserfahrzeugs 11 übertragen werden. Über diesen Lenkdraht 21 werden im Responderbetrieb von Trackvorrichtung 15 und Transponder/Responder 16 auch die elektrischen Abfrageimpulse übertragen. Die Lenkvorrichtung 20 ist eingangsseitig an dem Ausgang der Trackvorrichtung 15 angeschlossen, so dass die von der Trackvorrichtung 15 bestimmten Momentanpositionen des Unterwasserfahrzeugs 22 der Lenkvorrichtung 20 fortlaufend zur Verfügung stehen. Die Lenkvorrichtung 20 vergleicht die Momentanpositionen mit einer in ihr abgespeicherten Position eines Unterwasserobjekts und erzeugt aus den Positionsabweichungen Lenksignale für das Unterwasserfahrzeug 11. Mittels dieser Lenksignale wird das Unterwasserfahrzeug 11 auf kürzestem Weg zu der Position des Unterwasserobjekts hingeführt.

## Patentansprüche

1. Unterwasserfahrzeugtrackingeinrichtung, bestehend aus ein Unterwasserfahrzeug (11) mit einer getauchten Plattform (13), die eine Momentanpositionen des fahrenden Unterwasserfahrzeugs (11) bestimmende Trackvorrichtung (15) aufweist, **dadurch gekennzeichnet, dass** die Plattform (13) in ihrer Tauchposition raumstabilisierbar ausgebildet und hierzu horizontal und vertikal wirkenden Manöverantriebe (18, 19) aufweist, die in Regelkreisen angeordnet sind.

2. Einrichtung nach Anspruch 1, **dadurch gekennzeichnet, dass** an der Plattform (13) vier um die Längsachse mit Radialabstand von dieser gleichmäßig verteilt angeordnete horizontale Manöverantriebe (18) und mindestens ein vertikaler Manöverantrieb (19) angeordnet und einzeln steuerbar sind.

3. Einrichtung nach Anspruch 1 oder 2, **dadurch gekennzeichnet, dass** die Plattform (13) von einem Trägerfahrzeug (10) ins Wasser aussetzbar ausgebildet ist und Plattform (13) und Trägerfahrzeug (10) durch ein Kabel (17) miteinander verbunden sind, das mindestens eine Signalleitung zum Datenaustausch aufweist.

4. Einrichtung nach einem der Ansprüche 1 - 3, **dadurch gekennzeichnet, dass** die Plattform (13) eine Ausbringvorrichtung (14) zum Aussetzen des Unterwasserfahrzeugs (11) aufweist.

5. Einrichtung nach einem der Ansprüche 1 - 4**, dadurch gekennzeichnet, dass** das Unterwasserfahrzeug (11) einen Transponder/Responder (16) trägt, der auf Abfrageimpulse hin akustische Antwortimpulse aussendet, und dass die Trackvorrichtung (15) einen Sender zum Aussenden der Abfrageimpulse und einen elektroakustischen Empfänger zum Empfangen der akustischen Antwortimpulse sowie eine Signalverarbeitungseinheit zum Bestimmen der momentanen Position des Unterwasserfahrzeugs (11) aus den in elektrische Empfangssignale gewandelten Antwortimpulsen aufweist.

6. Einrichtung nach einem der Ansprüche 1 - 5, **dadurch gekennzeichnet, dass** mit der Trackvorrichtung (15) eine auf der Plattform (13) angeordnete Lenkvorrichtung (20) zum Generieren von über einen Lenkdraht (21), vorzugsweise ein Glasfaserkabel, zum Unterwasserfahrzeug (11) übertragbaren Lenksignalen verbunden ist, die die von der Trackvorrichtung (15) bestimmten Momentanpositionen des Unterwasserfahrzeugs (11) mit einer ihr eingespeicherten Position eines Unterwasserobjekts fortlaufend vergleicht und aus den Positionsabweichungen das Unterwasserfahrzeug (11) zum Unterwasserobjekt führende Lenksignale erzeugt.

7. Verfahren zum Tracken eines Unterwasserfahrzeugs (11), bei dem auf einer getauchten Plattform (13) vom Unterwasserfahrzeug (11) gesendete Schallimpulse empfangen und in elektrische Empfangssignale gewandelt werden und aus den elektrischen Empfangssignalen fortlaufend die momentane Position des Unterwasserfahrzeugs (11) bestimmt wird, **dadurch gekennzeichnet, dass** die Plattform (13) mittels geregelter, horizontal und vertikal wirkender Manöverantriebe (18, 19) in ihrer Tauchposition raumstabilisiert wird.

8. Verfahren nach Anspruch 7, **dadurch gekennzeichnet, dass** das Unterwasserfahrzeug (11) zusammen mit der Plattform (13) von einem Trägerfahrzeug (10) aus ins Wasser eingesetzt und das Unterwasserfahrzeug (11) von der Plattform (13) aus gestartet wird.

9. Verfahren nach Anspruch 8 **dadurch gekennzeichnet, dass** die Plattform (13) und das Trägerfahrzeug (10) mit einem Kabel (17) verbunden werden und dass das Kabel (17) zum Fieren und Einholen der Plattform (13) und/oder Datenaustausch zwischen Plattform (13) und Trägerfahrzeug (10) verwendet wird.

10. Verfahren nach einem der Ansprüche 7- 9 **dadurch gekennzeichnet, dass** die vom Unterwasserfahrzeug (11)gesendeten Schallimpulse von elektrischen oder akustischen Schallimpulsen ausgelöst werden, die von der Plattform (13) aus ausgesendet werden.

## Claims

1. Underwater vehicle tracking device consisting of an underwater vehicle (11), said device having a submerged platform (13) which has a tracking apparatus (15) that determines instantaneous positions of the moving underwater vehicle (11), **characterized in that** the platform (13) is formed such that its submerged position can be spatially stabilized and, to this end, has maneuver drives (18, 19) which act horizontally and vertically and are arranged in control loops.

2. Device according to Claim 1, **characterized in that** four horizontal maneuver drives (18), which are arranged such that they are uniformly distributed about the longitudinal axis at a radial distance from the latter, and at least one vertical maneuver drive (19) are arranged on the platform (13) and can be individually controlled.

3. Device according to Claim 1 or 2, **characterized in that** the platform (13) is designed such that it can be lowered into the water by a carrier vehicle (10) and the platform (13) and carrier vehicle (10) are connected to one another by means of a cable (17) which has at least one signal line for interchanging data.

4. Device according to one of Claims 1 - 3, **characterized in that** the platform (13) has a deployment apparatus (14) for lowering the underwater vehicle (11).

5. Device according to one of Claims 1 - 4, **characterized in that** the underwater vehicle (11) has a transponder/responder (16) which transmits acoustic response pulses in response to interrogation pulses, and **in that** the tracking apparatus (15) has a transmitter for transmitting the interrogation pulses and an electroacoustic receiver for receiving the acoustic response pulses as well as a signal processing unit for determining the instantaneous position of the underwater vehicle (11) using the response pulses which have been converted into electrical received signals.

6. Device according to one of Claims 1 - 5, **characterized in that** a steering apparatus (20) which is arranged on the platform (13) and is intended to generate steering signals which can be transmitted, via a steering wire (21), preferably a glass fiber cable, to the underwater vehicle (11) is connected to the tracking apparatus (15) and continuously compares the instantaneous positions of the underwater vehicle (11), which are determined by the tracking apparatus (15), with a position (which is stored in it) of an underwater object and uses the differences in position to generate steering signals which guide the underwater vehicle (11) to the underwater object.

7. Method for tracking an underwater vehicle (11), in which sound pulses which are transmitted by the underwater vehicle (11) are received in a submerged platform (13) and are converted into electrical received signals and the instantaneous position of the underwater vehicle (11) is continuously determined using the electrical received signals, **characterized in that** the submerged position of the platform (13) is spatially stabilized using controlled maneuver drives (18, 19) which act horizontally and vertically.

8. Method according to Claim 7, **characterized in that** the underwater vehicle (11), together with the platform (13), is inserted into the water from a carrier vehicle (10) and the underwater vehicle (11) is started from the platform (13).

9. Method according to Claim 8, **characterized in that** the platform (13) and the carrier vehicle (10) are connected to a cable (17), and **in that** the cable (17) is used to lower and retrieve the platform (13) and/or to interchange data between the platform (13) and the carrier vehicle (10).

10. Method according to one of Claims 7 - 9, **characterized in that** the sound pulses which are transmitted by the underwater vehicle (11) are triggered by electrical or acoustic sound pulses which are transmitted from the platform (13).

## Revendications

1. Dispositif de suivi d'un sous-marin, constitué d'un sous-marin (11) avec une plate-forme immergée (13), qui présente un dispositif de suivi (15) déterminant des positions instantanées du sous-marin en mouvement (11), **caractérisé en ce que** la plate-forme (13) est réalisée de manière à pouvoir stabiliser sa position immergée dans l'espace, et présente à cet effet des entraînements de manoeuvre agissant horizontalement et verticalement (18, 19), qui sont disposés dans des circuits de réglage.

2. Dispositif selon la revendication 1, **caractérisé en ce que** quatre entraînements de manoeuvre horizontaux (18) disposés de manière répartie uniformément autour de l'axe longitudinal à distance radiale de celui-ci, ainsi qu'au moins un entraînement de manoeuvre vertical (19) sont disposés sur la plate-forme (13) et peuvent être commandés séparément.

3. Dispositif selon la revendication 1 ou 2, **caractérisé en ce que** la plate-forme (13) est réalisée de manière à pouvoir être mise à l'eau par un véhicule porteur (10), et la plate-forme (13) et le véhicule porteur (10) sont connectés l'un à l'autre par un câble (17), qui présente au moins une ligne de signal pour l'échange de données.

4. Dispositif selon l'une quelconque des revendications 1 à 3, **caractérisé en ce que** la plate-forme (13) présente un dispositif de déchargement (14) pour mettre à l'eau le sous-marin (11).

5. Dispositif selon l'une quelconque des revendications 1 à 4, **caractérisé en ce que** le sous-marin (11) porte un transpondeur/répondeur (16) qui émet, en réponse à des impulsions d'interrogation, des impulsions de réponse acoustiques, et **en ce que** le dispositif de suivi (15) présente un émetteur pour émettre les impulsions d'interrogation et un récepteur électroacoustique pour recevoir les impulsions de réponse acoustiques ainsi qu'une unité de traitement des signaux pour déterminer la position instantanée du sous-marin (11) à partir des impulsions de réponse converties en signaux de réception électriques.

6. Dispositif selon l'une quelconque des revendications 1 à 5, **caractérisé en ce qu'**un dispositif de direction (20) disposé sur la plate-forme (13) est connecté au dispositif de suivi (15) pour générer des signaux de direction pouvant être transmis au sous-marin (11) par le biais d'un câble de direction (21), de préférence un câble en fibre de verre, le dispositif de direction (20) comparant en continu les positions instantanées du sous-marin (11) déterminées par le dispositif de suivi (15) avec une position d'un objet sous-marin mémorisée dans celui-ci, et le sous-marin (11) produisant à partir des écarts de position des signaux de direction conduisant à l'objet sous-marin.

7. Procédé de suivi d'un sous-marin (11), dans lequel, sur une plate-forme immergée (13), des impulsions sonores envoyées par le sous-marin (11) sont reçues et converties en signaux de réception électriques, et à partir des signaux de réception électriques, la position instantanée du sous-marin (11) est déterminée en continu, **caractérisé en ce que** la position immergée de la plate-forme (13) peut être stabilisée dans l'espace au moyen d'entraînements de manoeuvre (18, 19) régulés, agissant horizontalement et verticalement.

8. Procédé selon la revendication 7, **caractérisé en ce que** le sous-marin (11), conjointement avec la plate-forme (13), est mis à l'eau à partir d'un véhicule porteur (10) et le sous-marin (11) est lancé à partir de la plate-forme (13).

9. Procédé selon la revendication 8, **caractérisé en ce que** la plate-forme (13) et le véhicule porteur (10) sont connectés à un câble (17) et **en ce que** le câble (17) est utilisé pour laisser aller ou amener la plate-forme (13) et/ou est utilisé pour l'échange de données entre la plate-forme (13) et le véhicule porteur (10).

10. Procédé selon l'une quelconque des revendications 7 à 9, **caractérisé en ce que** les impulsions sonores envoyées par le sous-marin (11) sont déclenchées par des impulsions sonores électriques ou acoustiques, qui sont envoyées depuis la plate-forme (13).
